# EUROPÄISCHE PATENTSCHRIFT

(11) **EP 0 679 047 B1**
(45) Veröffentlichungstag und Bekanntmachung des Hinweises auf die Patenterteilung: **07.06.2000**
(21) Anmeldenummer: 95104763.8
(22) Anmeldetag: 30.03.1995
(51) Int. Cl.: H05B 41/288, H05B 41/392

(54) **Steuerschaltungsanordnung für eine Leistungsschaltungsanordnung zum gepulsten Betrieb einer Entladungslampe**
Circuit for operating a discharge lamp with pulses
Circuit pour l'alimentation pulsée d'une lampe à décharge

(30) Priorität: 20.04.1994 DE 4413826
(43) Veröffentlichungstag der Anmeldung: 25.10.1995
(73) Patentinhaber: Patent-Treuhand-Gesellschaft für elektrische Glühlampen mbH, 81543 München (DE)
(72) Erfinder: Bernitz, Franz, D-82008 Unterhaching (DE); Hirschmann, Günther, D-81827 München (DE); Huber, Andreas, D-82216 Maisach (DE); Bönigk, Michael, D-10245 Berlin (DE)

(56) Entgegenhaltungen:
- WO-A-88/09108
- DE-A- 3 636 901
- DE-A- 4 301 276

## Beschreibung

Die Erfindung betrifft eine Steuerschaltungsanordnung für eine Leistungsschaltungsanordnung zum gepulsten Betrieb einer Entladungslampe, insbesondere Natriumhochdruckentladungslampe gemäß dem Oberbegriff des Anspruchs 1.

Der gepulste Betrieb von Entladungslampen, insbesondere Natriumhochdruckentladungslampen, stellt besonders hohe Anforderungen an die Leistungselektronik der Schaltungsanordnung. Wie in der deutschen Patentanmeldung DE 43 01 276 A1 aufgeführt, läßt sich bei Natrium-Hochdruckentladungslampen eine optimale Einstellung der lichttechnischen Daten, wie Brennspannung, Lichtausbeute, Farbtemperatur und Farbwiedergabeindex, durch die Regelung des Dampfdrucks erreichen. Als Regelgröße für den Dampfdruck kann die Impedanz des Plasmas in der Lampe dienen, wobei es zum stabilisierten Betrieb der Lampe nur noch erforderlich ist, die Ausgangsleistung der Stromversorgung so zu regeln, daß die Impedanz der Lampe den gefundenen Wert annimmt.

Die Impedanz der Lampe kann grundsätzlich durch Bildung des Quotienten aus der Lampenspannung und dem Lampenstrom gewonnen werden, wobei im Impulsbetrieb sowohl der jeweilige Wert in der Impulsphase als auch in der Haltephase benutzt werden kann. Bei Verwendung einer Stromversorgung mit gegenüber Netzspannungsschwankungen stabilisierter Leerlaufspannung und vorgegebener Ausgangsimpedanz genügt es sogar, lediglich den Strom oder die Spannung an der Lampe auf den vorgegebenen Sollwert zu regeln, der dem Optimalwert des Dampfdrucks und damit dem der Farbwiedergabeeigenschaften und der Lichtausbeute sowie der Brennspannung entspricht. Im Fall eines Impulsbetriebs der Lampe durch eine Stromversorgung mit gegenüber Netzspannungsschwankungen stabilisierter Leerlaufspannung und vorgegebener Ausgangsimpedanz reicht als Regelgröße eine der Größen Impulsspannung, Impulsstrom, Haltespannung oder Haltestrom. Die Nachregelung der Lampenleistung kann dann wahlweise durch die Veränderung der Breite und des Abstands der Leistungsimpulse und/oder der Halteleistung realisiert werden.

Weiterhin zeigte sich, daß beim gepulsten Betrieb von Natrium-Hochdruckentladungslampen durch die Änderung der Momentanleistung während der Impulsphase die Farbtemperatur frei zwischen 2500 und mehr als 3000 K eingestellt werden kann, wie in der deutschen Patentanmeldung P 43 01 256.6 aufgeführt.

Darüber hinaus ist in der europäischen Patentanmeldung EP-A-0 671 868, welche als Stand der Technik nach Artikel 54(3) EPÜ gilt, eine Leistungsschaltungsanordnung zum gepulsten Betrieb von Entladungslampen, insbesondere Natriumhochdruckentladungslampen beschrieben, die einen optimalen Betrieb dieser Lampen sicherstellt. Diese Leistungsschaltungsanordnung weist zwei parallelverschaltete Halbbrücken auf, die getrennt angesteuert werden, wobei jeder Halbbrücke eine eigene strombegrenzende Induktivität zugeordnet ist. Dadurch ist eine unabhängige Regelung der Ströme bei je nach Induktivität frei wählbaren Betriebsfrequenzen während der Haltephase (Simmerstrombetrieb) und während der Pulsphase (Impulsstrombetrieb) möglich, so daß der Pulsbetrieb völlig frei an die Bedürfnisse der zu betreibenden Entladungslampe angepaßt werden kann.

Aufgabe der Erfindung ist es nun, eine Steuerschaltungsanordnung für die oben aufgeführte Leistungsschaltungsanordnung zu schaffen, die mit wenigen Bauteilen auskommt und kostengünstig zu verwirklichen ist. Mit der Steuerschaltungsanordnung sollte keinerlei Beschränkung in der Verwirklichung der Betriebsströme und -frequenzen durch die Leistungsschaltungsanordnung verbunden sein.

Die Aufgabe wird durch eine Steuerschaltungsanordnung mit den im kennzeichnenden Teil des Anspruchs 1 aufgeführten Merkmalen gelöst. Weitere vorteilhafte Merkmale der Schaltungsanordnung sind den Unteransprüchen zu entnehmen.

Die Steuerung der Leistungsschaltungsanordnung basiert auf der in der deutschen Patentanmeldung DE 4 301 276 A1 aufgezeigten Erkenntnis, daß die der Lampe zugeführte Leistungsaufnahme und damit auch die gebrauchswertbestimmenden Eigenschaften der Entladungslampe, wie z.B. die Farbwiedergabe, proportional von der Lampenspannung bei eingeprägtem Lampenstrom abhängen. Die Steuerschaltungsanordnung besteht aus einem Burstgenerator zur Erzeugung der Steuersignale für die Pulsphase, einem Simmergenerator zur Erzeugung der Steuersignale für die Simmerphase und einem Burstwiederholgenerator zur Einstellung des zeitlichen Abstands zwischen den Pulsphasen. Die mittels dieser Baugruppen erzeugten Signale werden über eine Logikschaltung und entsprechende Ansteuerschaltungen an die Pulsanschlüsse bzw. Simmeranschlüsse der Transistoren der Leistungsschaltungsanordnung gegeben. Die Logikschaltung sorgt dabei dafür, daß während der Simmerphase das an die Transistoren für den Pulsbetrieb gegebene Signal Null und während der Pulsphase das an die Transistoren für den Simmerbetrieb gegebene Signal Null ist. Während der Simmerphase wird über den Spannungsabgriff am Mittenabgriff zwischen den beiden Transistoren für die Pulsphase der Leistungsschaltungsanordnung eine der Lampenspannung proportionale Spannung abgegriffen und zu einem definierten Zeitpunkt zwischen den Impulsbursts in einem Sample- und Hold-Glied gespeichert. Mittels eines Subtrahierers wird diese Spannung mit einer Sollwert-Spannung, bei der ein optimaler Betrieb der Natriumhochdruckentladungslampe gegeben ist, verglichen. Bei Abweichung der Istwert-Spannung von der Sollwert-Spannung veranlaßt ein Integralregler eine Frequenzänderung am Burstwiederholgenerator und bewirkt damit eine Änderung der in die Lampe eingespeisten Leistung. Diese Leistungsänderung hat eine Veränderung der Lampenspannung zur Folge, die so auf einen optimalen Arbeitspunkt eingeregelt wird.

Der Burstgenerator und der Simmergenerator sehen eine Variation der Länge der rechteckigen Steuerimpulse vor. Außerdem kann am Burstgenerator die Anzahl der Signale, die zu einer Gruppe zusammengefaßt sind, variiert werden. Dieser Schaltungsaufbau ermöglicht zusätzlich die Verschiebung der Farbtemperatur der Natriumhochdruckentladungslampe zwischen 2500 und 3000 K, ohne daß dabei der Farbwiedergabeindex verändert wird. Die Farbtemperatur kann daher wie in der deutschen Patentanmeldung DE 4 301 256 A1 allgemein dargestellt, durch die Änderung der Anzahl der Steuersignale für die Pulsphase und die Änderung der Länge dieser Steuersignale und/oder die Länge der Steuersignale für die Simmerphase und Anpassung der Istwert-Spannung an eine entsprechend geänderte Sollwert-Spannung variiert werden.

Der Burstgenerator und der Simmergenerator besteht vorteilhaft aus einem gesteuerten Oszillator. Dem gesteuerten Oszillator des Burstgenerators ist vorteilhaft ein Schwingungszähler nachgeschaltet, wobei beide durch ein Logikglied verknüpft sind.

Der Burstwiederholgenerator besteht vorteilhaft aus einem Oszillator mit veränderbarer Frequenz. Das Sample- und Hold-Glied ist vorteilhaft aus einem steuerbaren Schalter mit einem nachgeschalteten Speicherglied aufgebaut, während der Integralregler aus einem Operationsverstärker oder einem digitalen Stellungsalgorithmus besteht.

Die Steuerabschaltungsanordnung kann vorteilhaft zusätzlich einen Komparator umfassen, der einerseits über eine Überwachungslogik mit dem Steueranschluß der Impulszündschaltung in der Leistungsschaltungsanordnung und andererseits mit dem Eingang des Sample- und Hold-Glieds verknüpft ist. Hierdurch wird eine Zündüberwachung der Natriumhochdruckentladungslampe geschaffen. Die an der Lampe anliegende Spannung wird vom Komparator mit einer Referenzspannung verglichen. Überschreitet diese die Referenzspannung, so wird bei der Leistungsschaltungsanordnung durch Schließen eines Schalters die Impulszündschaltung aktiviert.

Die Steuerabschaltungsanordnung ermöglicht neben einer voneinander unabhängigen Einstellbarkeit der Farbtemperatur und des Farbwiedergabeindex auch eine Leistungsregelung der Natriumhochdruckentladungslampe mit der in der deutschen Patentanmeldung DE 4 301 276 A1 aufgeführten Leistungsschaltungsanordnung, ohne daß dabei die Farbtemperatur wesentlich beeinflußt wird. Dies erlaubt es z.B., die Leistung von Natriumhochdruckentladungslampen für Außenbeleuchtungsanlagen während der Nacht auf halbe Leistung herabzuschalten.

Die Erfindung ist anhand der nachfolgenden Figuren näher veranschaulicht.
- Fig. 1: zeigt in schematischer Form den Aufbau der Steuerschaltungsanordnung
- Fig. 2: zeigt den Aufbau der Leistungsschaltungsanordnung
- Fig. 3: zeigt schematisch den Verlauf der von der Steuerschaltungsanordnung erzeugten Steuersignale

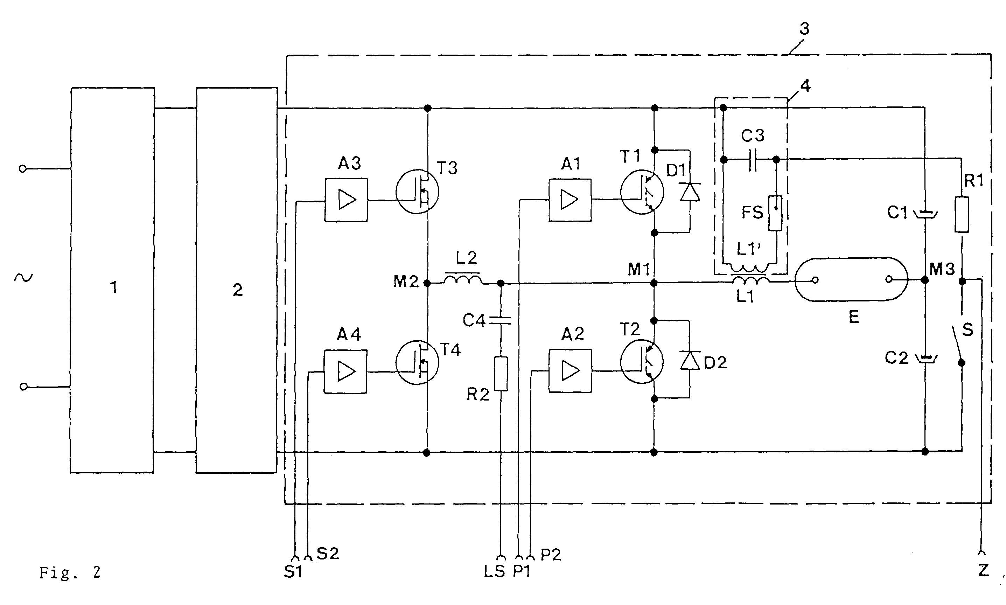

In Fig. 2 ist der den Aufbau der Leistungsschaltungsanordnung zum gepulsten Betrieb einer Natriumhochdruckentladungslampe E dargestellt.

Die Schaltungsanordnung, wie sie in der europäischen Patentanmeldung EP-A-0 671 868 beschrieben ist, setzt sich aus einem Funkentstörfilter 1, einem Generator 2 zur Erzeugung einer Gleichspannung und einer Doppelhalbbrücke 3 mit einer integrierten Impulszündschaltung 4 zusammen.

Das Funkentstörfilter 1 besitzt einen bekannten herkömmlichen Aufbau und soll hier nicht näher betrachtet werden. Der Gleichspannungsgenerator 2 beinhaltet eine Gleichrichterbrücke und einen Hochsetzsteller bekannter Bauart und erzeugt an seinem Ausgang eine stabiliserte Gleichspannung.

Die Doppelhalbbrücke 3 beinhaltet eine erste Halbbrücke mit zwei in Reihe geschalteten MOS-FET-Transistoren T3, T4 parallel zum Ausgang des Generators 2 zur Erzeugung der Simmerphase. Die Ansteuerung der beiden Transistoren T3, T4 erfolgt mittels Ansteuerschaltungen A3 bzw. A4 aus der unten beschriebenen Steuerschaltungsanordnung über die Simmeranschlüsse S1 und S2.

Parallel zur ersten Halbbrücke ist eine zweite Halbbrücke mit zwei in Reihe geschalteten Leistungstransistoren T1, T2 und Freilaufdioden D1, D2 geschaltet. Die Ansteuerung dieser beiden Transistoren T1, T2 erfolgt mittels Ansteuerschaltungen A1, A2 aus derselben Steuerschaltungsanordnung über die Impulsanschlüsse P1 und P2. Die Ansteuerschaltungen A1 bis A4 besitzen einen für solche Schaltungen üblichen Aufbau und sollen hier nicht näher betrachtet werden.

Parallel zur zweiten Halbbrücke sind als Zwischenkreiskondensator zwei gleich große Elektrolytkondensatoren C1 und C2 geschaltet.

Zwischen den Mittenabgriff M2 der beiden MOS-FET-Transistoren T3, T4 für die Simmerphase und den Mittenabgriff M1 der Leistungstransistoren T1, T2 ist eine strombegrenzende Induktivität L2 für den Simmerbetrieb geschaltet. Zwischen den Mittenabgriff M1 der Leistungstransistoren T1, T2 und den Mittenabgriff M3 der beiden Elektrolytkondensatoren C1, C2 ist in Reihe eine strombegrenzende Induktivität L1 für die Pulsphase und die Natriumhochdruckentladungslampe E geschaltet.

Die Impulszündschaltung 4 besteht aus einer Reihenschaltung eines Kondensators C3, einer Wicklung L1' und einer Schaltfunkenstrecke FS. Diese ist einerseits mit dem positiven Eingang der Doppelhalbbrücke 3 und über einen Widerstand R1 und einen Schalter S mit dem negativen Eingang der Doppelhalbbrücke 3 verbunden. Die Einspeisung der Zündspannung in die Lampe erfolgt durch Anbringung der zusätzlichen Wicklung L1' auf der strombegrenzenden Induktivität L1. Über einen Zündanschluß Z zwischen dem Widerstand R1 und dem Schalter S kann die Impulszündschaltung von außen gesteuert werden.

Am Mittenabgriff M1 ist außerdem ein aus einem Kondensator C4 und einem Widerstand R2 bestehender Abgriff LS für eine der Lampenspannung proportionale Spannung vorgesehen.

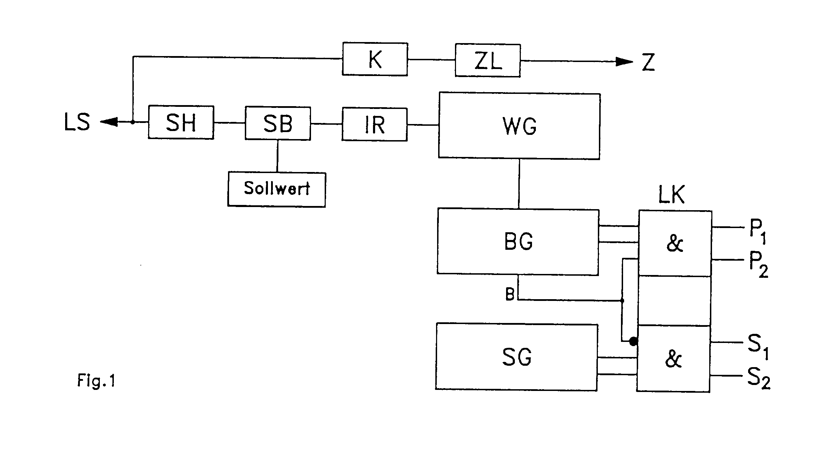

In Figur 1 ist schematisch der Aufbau der Steuerschaltungsanordnung dargestellt. Hauptbestandteile sind der Burstwiederholgenerator WG zur Einstellung der Widerholfrequenz der Steuersignalgruppen des Burstgenerators BG, der Burstgenerator BG zur Erzeugung der Steuersignale für die Pulsphase und der Simmergenerator SG zur Erzeugung der Steuersignale für die Simmerphase. Über je zwei Leitungen sind der Burstgenerator BG und der Simmergenerator SG mit einer Logikschaltung LK verbunden. Diese Logikschaltung LK nimmt mit Hilfe des zusätzlichen Signals B für die Zeitdauer der Bursts aus dem Burstgenerator BG eine gegenseitige Verriegelung von Burstgenerator BG und Simmergenerator SG vor und leitet die Signale an die Pulsanschlüsse P1, P2 bzw. die Simmeranschlüsse S1, S2 der Transistoren der Leistungsschaltungsanordnung weiter.

Der Burstwiederholgenerator WG ist zur Steuerung der Wiederholfrequenz über einen Integralregler IR, einen Subtrahierer SB, der einen Sollwertvergleich vornimmt, und ein Sample- und Hold-Glied SH mit dem Spannungsabgriff LS der Leistungsschaltungsanordnung verknüpft. Außerdem ist zur Steuerung der Impulszündschaltung der Zündsteueranschluß Z über eine Überwachungslogik ZL und einen Komparator K mit dem Eingang des Sample- und Hold-Glieds SH verbunden.

Die einzelnen Funktionsglieder können in diskreter Form, d.h. als Oszillator oder Operationsverstärker ausgeführt sein. Es ist aber auch möglich, die oben aufgeführten Funktionsglieder in einen Mikrokontroller zu implementieren. Die einzelnen Funktionen werden dann durch Programmalgorithmen realisiert.

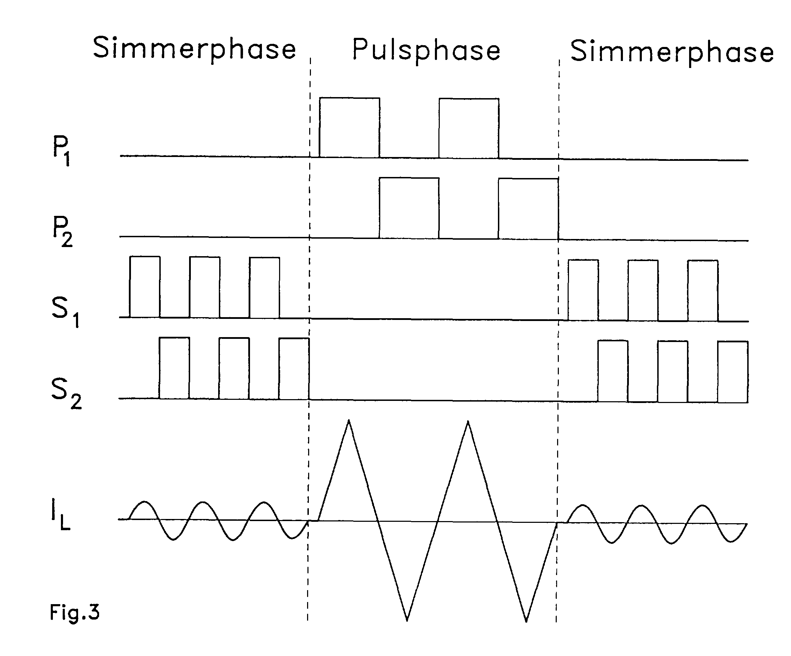

In Fig. 3 ist rein schematisch der zeitliche Verlauf der an die Pulsanschlüsse P1 und P2 der Transistoren für die Pulsphase und die Simmeranschlüsse S1 und S2 der Transistoren für die Simmerphase gegebenen Steuersignale und den durch diese Steuerung von der Leistungsschaltungsanordnung erzeugte pulsförmige Strom I_{L}, wie er der Entladungslampe zur Verfügung gestellt wird, gezeigt.

## Patentansprüche

1. Steuerschaltungsanordnung für eine Leistungsschaltungsanordnung zum gepulsten Betrieb einer Entladungslampe, insbesondere einer Natriumhochdruckentladungslampe, wobei die Leistungsschaltungsanordnung
- einen Generator (2) zur Erzeugung einer positiven Gleichspannung
- eine Doppelhalbbrücke (3), bestehend aus zwei parallelgeschalteten Halbbrücken mit Transistoren (T1, T2; T3, T4) als Schaltmittel zur Erzeugung einer Puls- bzw. Simmerphase und einem Steueranschluß (P1, P2; S1, S2) für jeden Transistor (T1, T2; T3, T4)
- eine in der Doppelhalbbrücke (3) integrierte Impulszündschaltung (4) mit einem Zündsteueranschluß (Z)
- sowie einen über einen Kondensator (C4) und einen Widerstand (R2) an den Mittenabgriff (M1) zwischen den beiden Transistoren (T1, T2) für die Pulsphase geführten Spannungsabgriff (LS)
umfaßt, dadurch gekennzeichnet, daß die Steuerschaltungsanordnung
- einen Burstgenerator (BG) zur Erzeugung einer definierten Anzahl von rechteckigen Steuersignalen bestimmter Länge für die Pulsphase und komplimentäre Lieferung dieser Gruppe von Steuersignalen über zwei getrennte Leitungen an eine Logikschaltung (LK) zusammen mit einem Signal B, das der Zeitdauer der Gruppe von Steuersignalen entspricht
- einen Simmergenerator (SG) zur fortwährenden Erzeugung von rechteckigen Steuersignalen bestimmter Länge für die Simmerphase und komplimentäre Lieferung dieser Steuersignale über zwei getrennte Leitungen an eine Logikschaltung (LK)
- einen Burstwiederholgenerator (WG) zur Einstellung einer bestimmten Wiederholfrequenz für die Steuersignalgruppen des Burstgenerators (BG)
- eine Logikschaltung (LK) zur Weitergabe der Steuersignale für die Pulsphase während der jeweiligen Pulsphase an die Steueranschlüsse P1 bzw. P2 und Weitergabe der Steuersignale für die Simmerphase zwischen den Zeiten der Pulsphase an die Steueranschlüsse S1, S2
- ein Sample- und Hold-Glied (SH), das über den Spannungsabgriff (LS) am Mittenabgriff (M1) zwischen den beiden Transistoren (T1, T2) für die Pulsphase eine momentane Istwert-Spannung zu einem definierten Zeitpunkt zwischen den Steuersignalgruppen des Burstgenerators (BG) abgreift und speichert
- einen Subtrahierer (SB), der diese abgegriffene Spannung mit einer Sollwert-Spannung vergleicht und
- einen Integralregler (IR), der bei Abweichung der Istwert-Spannung von der Sollwert-Spannung eine Frequenzänderung am Burstwiederholgenerator (WG) veranlaßt
umfaßt.

2. Steuerschaltungsanordnung nach Anspruch 1,
dadurch gekennzeichnet, daß der Burstgenerator (BG) aus einem gesteuerten Oszillator mit einem nachgeschalteten Schwingungszähler besteht, wobei der Oszillator mit dem Schwingungszähler durch ein Logikglied verknüpft ist.

3. Steuerschaltungsanordnung nach Anspruch 1,
dadurch gekennzeichnet, daß der Simmergenerator (SG) aus einem gesteuerten Oszillator besteht.

4. Steuerschaltungsanordnung nach Anspruch 1,
dadurch gekennzeichnet, daß der Burstwiederholgenerator (WG) aus einem Oszillator mit veränderbarer Frequenz besteht.

5. Steuerschaltungsanordnung nach Anspruch 1,
dadurch gekennzeichnet, daß die Logikschaltung (LK) aus einer Verknüpfungslogik besteht.

6. Steuerschaltungsanordnung nach Anspruch 1,
dadurch gekennzeichnet, daß das Sample- und Hold-Glied (SH) aus einem steuerbaren Schalter mit einem nachgeschalteten Speicherglied besteht.

7. Steuerschaltungsanordnung nach Anspruch 1,
dadurch gekennzeichnet, daß der Integralregler (IR) aus einem Operationsverstärker oder einem digitalen Stellungsalgorithmus besteht.

8. Steuerschaltungsanordnung nach Anspruch 1,
dadurch gekennzeichnet, daß die Schaltungsanordnung zusätzlich einen Komparator (K) umfaßt, der einerseits über eine Überwachungslogik (ZL) mit dem Zündsteueranschluß (Z) der Leistungsschaltungsanordnung und andererseits mit dem Subtrahierer (SB) verbunden ist.

9. Steuerschaltungsanordnung nach Anspruch 1,
dadurch gekennzeichnet, daß die diskreten Funktionsglieder durch einen geeigneten Mikrokontroller mit entsprechenden Programmalgorithmen ausgeführt sind.

## Claims

1. Control circuit arrangement for a power circuit arrangement for pulsed operation of a discharge lamp, in particular a sodium high-pressure discharge lamp, the power circuit arrangement comprising
- a generator (2) for generating a positive DC voltage,
- a double half-bridge (3), consisting of two parallel-connected half bridges with transistors (T1, T2; T3, T4) as switching means for generating a pulse phase or simmer phase, and a control terminal (P1, P2; S1, S2) for each transistor (T1, T2; T3, T4),
- a pulse starter circuit (4), which is integrated in the double half-bridge (3) and has a starting control terminal (Z),
- as well as a voltage tap (LS) which is led via a capacitor (C4) and a resistor (R2) to the centre tap (M1) between the two transistors (T1, T2) for the pulse phase,
characterized in that the control circuit arrangement
- comprises a burst generator (BG) for generating a defined number of rectangular control signals of specific length for the pulse phase and complementary supply of this group of control signals via two separate lines to a logic circuit (LK) together with a signal B which corresponds to the duration of the group of control signals,
- a simmer generator (SG) for continuously generating rectangular control signals of specific length for the simmer phase and complementary supply of these control signals to a logic circuit (LK) via two separate lines,
- a burst repetition generator (WG) for setting a specific repetition frequency for the control signal groups of the burst generator (BG)
- a logic circuit (LK) for relaying the control signals for the pulse phase during the respective pulse phase to the control terminals P1 and P2, and for relaying the control signals for the simmer phase between the times of the pulse phase to the control terminals S1, S2
- a sample-and-hold element (SH) which, via the voltage tap (LS) at the centre tap (M1) between the two transistors (T1, T2), taps an instantaneous actual value voltage for the pulse phase at a defined instant between the control signal groups of the burst generator (BG), and stores it,
- a subtractor (SB) which compares this tapped voltage with a setpoint voltage, and
- an integral-action controller (IR) which causes a change in frequency at the burst repetition generator (WG) in the event of deviation of the actual-value voltage from the setpoint voltage.

2. Control circuit arrangement according to Claim 1, characterized in that the burst generator (BG) consists of a controlled oscillator with a downstream oscillation counter, the oscillator being combined with the oscillation counter by a logic element.

3. Control circuit arrangement according to Claim 1, characterized in that the simmer generator (SG) consists of a controlled oscillator.

4. Control circuit arrangement according to Claim 1, characterized in that the burst repetition generator (WG) consists of an oscillator with variable frequency.

5. Control circuit arrangement according to Claim 1, characterized in that the logic circuit (LK) consists of a logic operation circuit.

6. Control circuit arrangement according to Claim 1, characterized in that the sample-and-hold element (SH) consists of a controllable switch with a downstream storage element.

7. Control circuit arrangement according to Claim 1, characterized in that the integral-action controller (IR) consists of an operational amplifier or a digital control algorithm.

8. Control circuit arrangement according to Claim 1, characterized in that the circuit arrangement additionally comprises a comparator (K) which, on the one hand, is connected via a monitoring logic circuit (ZL) to the starting control terminal (Z) of the power circuit arrangement and, on the other hand, to the subtractor (SB).

9. Control circuit arrangement according to Claim 1, characterized in that the discrete function elements are implemented by a suitable microcontroller with appropriate programming algorithms.

## Revendications

1. Circuit de commande pour un circuit de puissance servant au fonctionnement pulsé d'une lampe à décharge, notamment une lampe à décharge au sodium à haute pression, dans lequel le circuit de puissance comprend :
- un générateur (2) pour produire une tension continue positive,
- un demi-pont double (3), consistant en deux demi-ponts montés en parallèle et comportant des transistors (T1, T2 ; T3, T4) en tant que moyens de commutation pour produire une phase d'impulsions ou bien une phase de maintien, et une borne de commande (P1, P2; S1, S2) pour chaque transistor (T1, T2 ; T3, T4),
- un circuit d'amorçage d'impulsion (4), intégré dans le demi-pont double (3) et comportant une borne de commande d'amorçage (Z);
- ainsi qu'une prise de tension (LS), réalisée par l'intermédiaire d'un condensateur (C4) et d'une résistance (R2) au niveau de la prise médiane (M1) entre les deux transistors (T1, T2), pour la phase d'impulsion ;
caractérisé en ce que le circuit de commande comprend :
- un générateur de salves (BG) pour produire un nombre défini de signaux rectangulaires de commande d'une longueur déterminée pour la phase d'impulsions et pour la fourniture complémentaire de ce groupe de signaux de commande, par l'intermédiaire de deux lignes séparées, à un circuit logique (LK) en même temps qu'un signal B, qui correspond à la durée du groupe de signaux de commande,
- un générateur de maintien (SG) pour la production continue de signaux rectangulaires de commande d'une longueur déterminée pour la phase de maintien et pour la fourniture complémentaire de ces signaux de commande, par l'intermédiaire de deux lignes séparées, à un circuit logique (LK),
- un générateur de répétition de salves (WG) pour le réglage d'une fréquence de récurrence prédéterminée pour les groupes de signaux de commande du générateur de salves (BG),
- un circuit logique (LK) pour la retransmission des signaux de commande pour la phase d'impulsions, pendant la phase d'impulsions correspondante, aux bornes de commande P1 et P2, et pour la retransmission des signaux de commande pour la phase de maintien, entre les temps de la phase d'impulsions, aux bornes de commande S1, S2,
- un montage d'échantillonnage (SH), qui prélève et qui conserve, par l'intermédiaire de la prise de tension (LS) au niveau de la prise médiane (M1) entre les deux transistors (T1, T2), pour la phase d'impulsions, une tension effective instantanée à un positionnement temporel défini entre les groupes de signaux de commande du générateur de salves (BG),
- un soustracteur (SB), qui compare cette tension prélevée à une tension de consigne, et
- un régulateur à action intégrale (IR) qui procède, lors d'un écart de la tension effective par rapport à la tension de consigne, à une modification de la fréquence au niveau du générateur de répétition de salves (WG).

2. Circuit de commande selon la revendication 1, caractérisé en ce que le générateur de salves (BG) consiste en un oscillateur commandé, à la suite duquel est monté un compteur d'oscillations, l'oscillateur étant associé au compteur d'oscillations par un élément logique.

3. Circuit de commande selon la revendication 1, caractérisé en ce que le générateur de maintien (SG) consiste en un oscillateur commandé.

4. Circuit de commande selon la revendication 1, caractérisé en ce que le générateur de répétition de salves (WG) consiste en un oscillateur à fréquence variable.

5. Circuit de commande selon la revendication 1, caractérisé en ce que le circuit logique (LK) consiste en une logique.

6. Circuit de commande selon la revendication 1, caractérisé en ce que le montage d'échantillonnage (SH) consiste en un commutateur pouvant être commandé et à la suite duquel est monté un élément de conservation.

7. Circuit de commande selon la revendication 1, caractérisé en ce que le régulateur à action intégrale (IR) consiste en un amplificateur opérationnel ou en un algorithme numérique de position .

8. Circuit de commande selon la revendication 1, caractérisé en ce que le circuit comprend en outre un comparateur (K) qui est relié, d'une part, par l'intermédiaire d'une logique de surveillance (ZL), à la borne de commande d'amorçage (Z) du circuit de puissance et, d'autre part, au soustracteur (SB).

9. Circuit de commande selon la revendication 1, caractérisé en ce que les éléments fonctionnels discrets sont réalisés par un microrégisseur approprié ayant des algorithmes de programme correspondants.
